# EUROPEAN PATENT APPLICATION

(11) **EP 4 524 950 A1**
(43) Date of publication of application: **19.03.2025**
(21) Application number: 23803472.2
(22) Date of filing: 27.04.2023
(51) Int. Cl.: G10H 1/00, G10G 3/02

(54) **INFORMATION PROCESSING DEVICE, INFORMATION PROCESSING METHOD, AND PROGRAM**

(30) Priority: 10.05.2022 JP 2022077465
(71) Applicant: Sony Group Corporation, Tokyo 108-0075 (JP)
(72) Inventor: SAGANO, Masayuki, Tokyo 108-0075 (JP); HORA, Keiko, Tokyo 108-0075 (JP); KAWANO, Jiro, Tokyo 108-0075 (JP); YOSHIDA, Yuya, Tokyo 108-0075 (JP); TOMINAGA, Kanna, Tokyo 108-0075 (JP); ITO, Rena, Tokyo 108-0075 (JP); MATSUI, Takeshi, Tokyo 108-0075 (JP); FUJIOKA, Takashi, Tokyo 108-0075 (JP)
(74) Representative: D Young & Co LLP
(86) International application number: PCT/JP2023/016700
(87) International publication number: WO 2023/218993

(57) **Abstract**

A smartphone (corresponding to an example of an "information processing apparatus") includes: an application execution unit provided so as to be able to execute a recording editing application (corresponding to an example of an "application having a recording function and an editing function of sound source data"); and a display control unit that causes a display unit to variably display a menu for sound quality improvement in conjunction with a type of the sound source data, the sound source data being selected by a user as a target for the sound quality improvement via the recording editing application.

## Description

### Field

The present disclosure relates to an information processing apparatus, an information processing method, and a program.

### Background

In recent years, the spread of portable information processing apparatuses such as smartphones and tablet terminals is remarkable. In addition, in these portable information processing apparatuses, the performance of the processing capability is rapidly improved, and the user can easily produce various media contents such as music and video by an individual using such an information processing apparatus.

Application software (application) for recording and editing that operates in an information processing apparatus is known for production of music content. The user can perform editing work of sound source data recorded by the information processing apparatus or purchased from the outside with a high degree of freedom using such an application.

In addition, some applications for recording and editing enable editing of sound source data recorded by a plurality of information processing apparatuses via a network, thereby supporting production of music content by a plurality of users in cooperation (see, for example, Patent Literature 1).

### Citation List

### Patent Literature

Patent Literature 1: WO 2019/102730 A

### Summary

### Technical Problem

However, the above-described conventional technology has room for further improvement in order to further improve convenience when the user produces the music content.

Therefore, the present disclosure proposes an information processing apparatus, an information processing method, and a program capable of improving convenience when a user produces music content.

### Solution to Problem

In order to solve the above problems, one aspect of an information processing apparatus according to the present disclosure includes an application execution unit provided to be able to execute an application having a recording function and an editing function of sound source data; and a display control unit that causes a display unit to variably display a menu for sound quality improvement in conjunction with a type of the sound source data, the sound source data being selected by a user as a target for the sound quality improvement via the application.

### Brief Description of Drawings

FIG. 1 is a schematic explanatory diagram of an information processing method according to an embodiment of the present disclosure.
FIG. 2 is a block diagram illustrating a configuration example of a smartphone according to an embodiment of the present disclosure.
FIG. 3 is a block diagram illustrating a configuration example of a server device according to an embodiment of the present disclosure.
FIG. 4 is a diagram illustrating a UI example at the time of track addition.
FIG. 5 is a diagram (part 1) illustrating a UI example at the time of track selection.
FIG. 6 is a diagram (part 2) illustrating a UI example at the time of track selection.
FIG. 7 is a diagram (part 3) illustrating a UI example at the time of track selection.
FIG. 8 is a diagram illustrating a UI example when a track type is changed.
FIG. 9 is a diagram (part 1) illustrating a UI example at the time of executing sound quality improvement processing.
FIG. 10 is a diagram illustrating contents of sound quality improvement processing.
FIG. 11 is a diagram (part 2) illustrating a UI example at the time of executing the sound quality improvement processing.
FIG. 12 is a diagram (part 3) illustrating a UI example at the time of executing the sound quality improvement processing.
FIG. 13 is a diagram (part 4) illustrating a UI example at the time of executing the sound quality improvement processing.
FIG. 14 is a diagram (part 5) illustrating a UI example at the time of executing the sound quality improvement processing.
FIG. 15 is a diagram illustrating notification contents of sound quality improvement processing.
FIG. 16 is a diagram illustrating a state in which the sound quality improvement processing is being executed.
FIG. 17 is a diagram (part 6) illustrating a UI example at the time of executing the sound quality improvement processing.
FIG. 18 is a diagram (part 7) illustrating a UI example at the time of executing the sound quality improvement processing.
FIG. 19 is an explanatory diagram (part 1) of a naming rule of a track name.
FIG. 20 is an explanatory diagram (part 2) of a naming rule of a track name.
FIG. 21 is a diagram (part 8) illustrating a UI example at the time of executing the sound quality improvement processing.
FIG. 22 is a view illustrating a UI example at the time of non-display/display switching.
FIG. 23 is a diagram (part 1) illustrating a UI example related to a count-in function.
FIG. 24 is a diagram (part 2) illustrating a UI example related to a count-in function.
FIG. 25 is a diagram (part 3) illustrating a UI example related to a count-in function.
FIG. 26 is a diagram illustrating a processing sequence in a case where the information processing system performs sound quality improvement processing.
FIG. 27 is a hardware configuration diagram illustrating an example of a computer that implements functions of a smartphone.

### Description of Embodiments

Hereinafter, embodiments of the present disclosure will be described in detail with reference to the drawings. In each of the following embodiments, the same parts are denoted by the same reference numerals, and redundant description will be omitted.

Furthermore, a case where the information processing apparatus according to the embodiment of the present disclosure is a smartphone 10 used by the user will be described below as a main example. Hereinafter, the recording and editing application operating on the smartphone 10 is referred to as a "recording editing application".

In addition, hereinafter, sound source data recorded by the smartphone 10 or purchased from the outside and stored in the storage of the smartphone 10 is appropriately referred to as a "track".

Furthermore, in the following description, a function of improving the sound quality of each track in the recording editing application according to the embodiment of the present disclosure is referred to as a sound quality improving function. The sound quality improving function may be illustrated as "Studio tuning" or "STUDIO TUNING" in the drawings to be described later. In addition, processing executed by the sound quality improving function is referred to as "sound quality improvement processing".

Furthermore, the description of the present disclosure will be made according to the following item order.
1. Overview
2. Configuration example of smartphone
3. Configuration example of server device
4. UI Example in Recording Editing Application
   4-1. At the time of track addition
   4-2. At the time of track selection
   4-3. When track type is changed
   4-4. At the time of executing sound quality improvement processing
   4-5. At the time of non-display/display switching
   4-6. Count-in function
5. Processing sequence
6. Modified Example
7. Hardware Configuration
8. Conclusion

### <<1. Overview>>

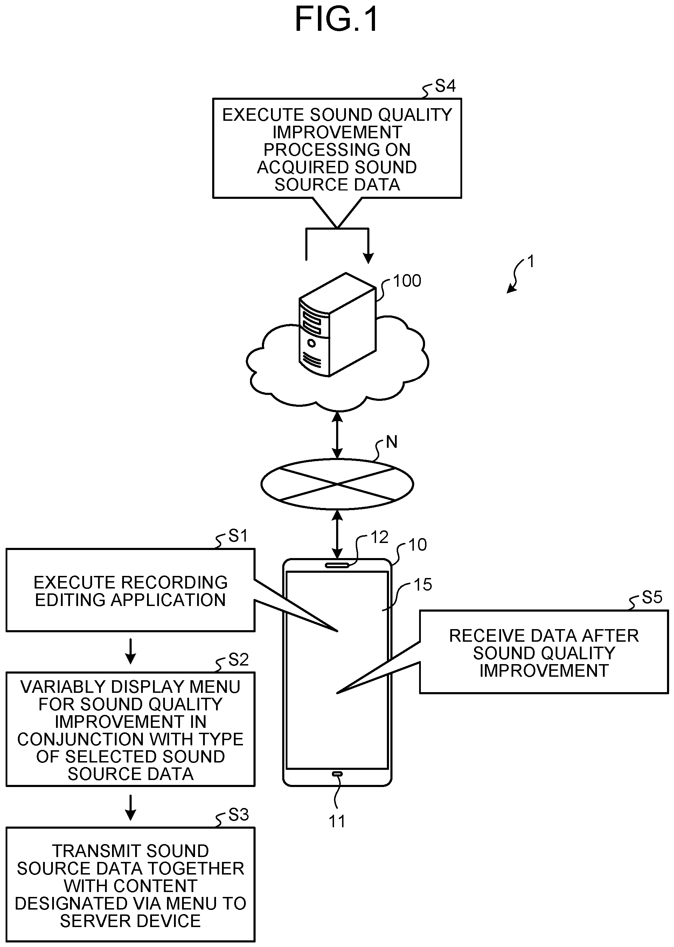

FIG. 1 is a schematic explanatory diagram of an information processing method according to an embodiment of the present disclosure. The information processing method according to the embodiment of the present disclosure is executed by an information processing system 1. As illustrated in FIG. 1, the information processing system 1 includes a smartphone 10 and a server device 100.

The smartphone 10 is a portable information processing apparatus used by the user. The smartphone 10 has a platform capable of executing the recording editing application according to the embodiment of the present disclosure.

As illustrated in FIG. 1, the smartphone 10 includes a microphone 11, a speaker 12, and a display unit 15. The microphone 11 is provided at one end close to a mouthpiece in the longitudinal direction of the smartphone 10. The speaker 12 is provided at the other end close to an earpiece with respect to the one end.

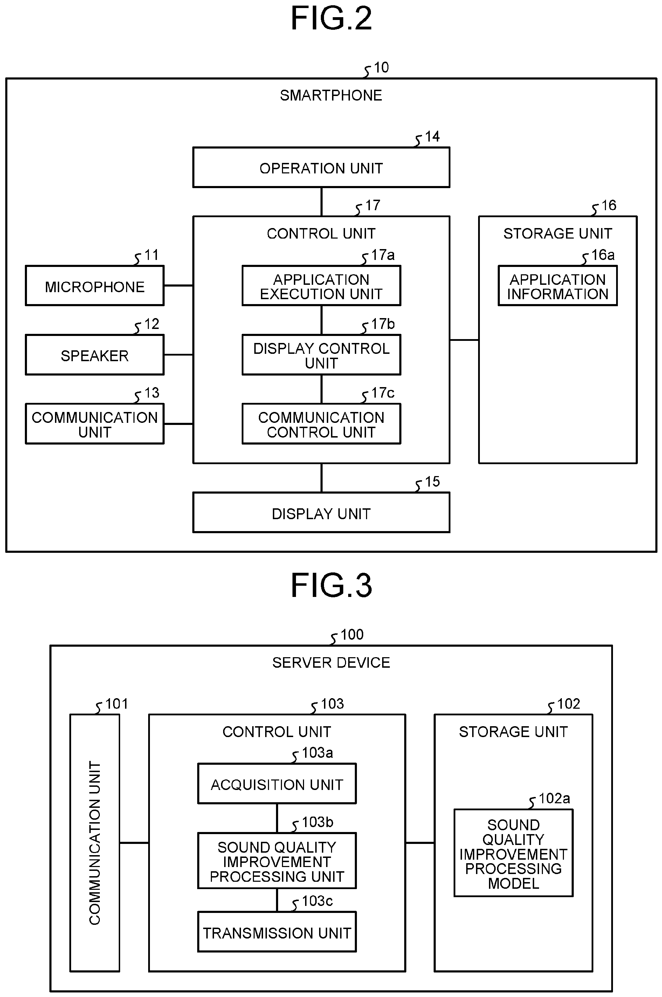

The display unit 15 is realized as a touch screen integrated with an operation unit 14 (see FIG. 2) to be described later, and has a rectangular shape. The touch screen detects a touch operation of the user. As a detection method of the touch screen, known methods such as a capacitance method, a resistive film method, a surface acoustic wave method (or an ultrasonic method), an infrared method, an electromagnetic induction method, and a load detection method are used.

In a case where the recording editing application is being executed on the smartphone 10, the touch screen displays various user interfaces (User Interface; UI) related to the recording editing application to detect a touch operation of the user on the UI.

Furthermore, in a case where an operation to start recording is performed in the recording editing application, the microphone 11 collects a sound emitted from a sound source (for example, a musical instrument) and records the sound as sound source data of a track type designated in advance in the recording. Furthermore, in a case where an operation of reproducing the sound source data is performed in the recording editing application, the speaker 12 outputs the sound source data selected at the time of reproduction.

Meanwhile, the conventional recording editing application has room for further improvement in order to further improve convenience when the user produces music content.

As described above, in recent years, a portable information processing apparatus such as the smartphone 10 has been rapidly improved in processing capability, and a user can easily produce music content by an individual using a recording editing application. In addition, along with this, there are more opportunities for the user to disclose the produced music content to, for example, a social network service (SNS), a video distribution service, or the like.

For this reason, in recent years, there is an increasing demand for sound quality improvement of music content produced by a user. Note that examples of the "sound quality improvement" mentioned here can include, for example, "audio separation" for separating a plurality of different sound sources included in a track recorded using one microphone 11, "de-noise" for removing noise, "reverberation removal" for removing unnecessary reverberation, and the like. In addition, "microphone simulation" for reproducing a microphone characteristic of a high-performance microphone, "studio simulation" for adding a unique reverberation of a recording studio or the like, and the like can be exemplified.

There is an actual situation that the conventional recording editing application does not sufficiently expand the sound quality improving function. For example, one track may be recorded with a single sound source or may be recorded with a plurality of sound sources, and the type of the track varies. A track including a plurality of sound sources can be a processing target of the "audio separation" described above, but a track of a single sound source cannot be the processing target. In the case of using the conventional recording editing application, it is necessary for the user to grasp such a difference according to the track type and to designate setting contents regarding sound quality improvement one by one.

Therefore, in the information processing method according to the embodiment of the present disclosure, the smartphone 10 variably displays the menu for sound quality improvement in conjunction with the type of sound source data selected as a target for sound quality improvement.

Specifically, as illustrated in FIG. 1, the smartphone 10 first executes the recording editing application (Step S1). Then, the smartphone 10 variably displays a menu for sound quality improvement in conjunction with the type of sound source data selected as a target for sound quality improvement in the recording editing application (Step S2).

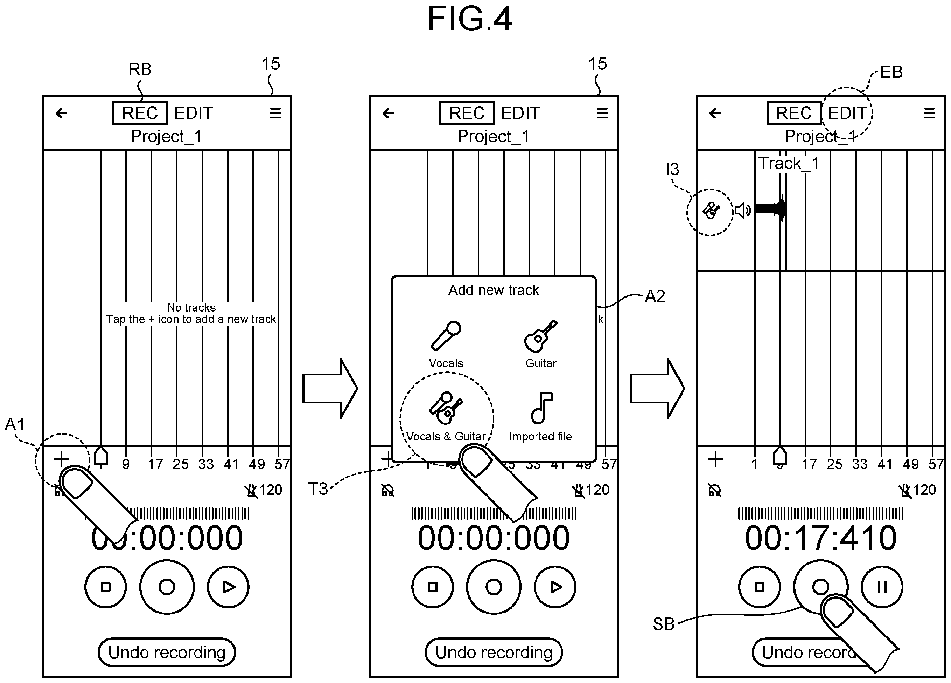

As described above, by automating the menu according to the type of the sound source data, it is not necessary for the user to grasp the difference according to the track type and to designate the setting contents related to sound quality improvement one by one. In addition, it is possible to prevent the user from making a wrong designation. That is, it is possible to further improve convenience when the user produces the music content. Note that specific examples of various UIs of the recording editing application according to the embodiment of the present disclosure including the case of Step S2 will be described later with reference to FIG. 4 and subsequent drawings.

Then, regarding the sound quality improvement, the smartphone 10 transmits the sound source data together with the content designated via the variably displayed menu to the server device 100 (Step S3).

The server device 100 is a device provided to be able to communicate with the smartphone 10 via a network N such as a mobile telephone network or the Internet. The server device 100 is implemented as, for example, a cloud server.

The server device 100 has a sound quality improvement processing model 102a (see FIG. 3), and is provided to be able to execute sound quality improvement processing using the sound quality improvement processing model 102a. The sound quality improvement processing model 102a is, for example, a deep neural network (DNN) model learned using a deep learning algorithm.

The server device 100 executes sound quality improvement processing on the sound source data acquired from the smartphone 10 by artificial intelligence (AI) processing using the sound quality improvement processing model 102a (Step S4). Then, the server device 100 transmits the data after the sound quality improvement to the smartphone 10, and the smartphone 10 receives the data (Step S5).

Note that, since the server device 100 integrally executes the sound quality improvement processing with a high processing load by a cloud server model, the smartphone 10 can continue to use the recording editing application or execute another application within a range not affecting the sound quality improvement processing even during the sound quality improvement processing.

### <<2. Configuration example of smartphone>>

Next, a configuration example of the smartphone 10 will be described. FIG. 2 is a block diagram illustrating a configuration example of the smartphone 10 according to the embodiment of the present disclosure. In FIG. 2 and FIG. 3 shown later, only components necessary for describing features of the embodiment of the present disclosure are illustrated, and descriptions of general components are omitted.

In other words, each component illustrated in FIGS. 2 and 3 is functionally conceptual, and does not necessarily need to be physically configured as illustrated. For example, a specific form of distribution and integration of each block is not limited to the illustrated form, and all or a part thereof can be functionally or physically distributed and integrated in an arbitrary unit according to various loads, usage conditions, and the like.

In the description using FIGS. 2 and 3, the description of the already described components may be simplified or omitted.

As illustrated in FIG. 2, the smartphone 10 includes a microphone 11, a speaker 12, a communication unit 13, an operation unit 14, a display unit 15, a storage unit 16, and a control unit 17.

Since the microphone 11 and the speaker 12 have been described, the description thereof is omitted here. The communication unit 13 is realized by a communication module or the like. The communication unit 13 is wirelessly connected to the above-described network N, and realizes communication with the server device 100 via the network N.

The operation unit 14 is an operation component mounted on the smartphone 10, and is realized by, for example, a touch panel. The display unit 15 is a display component mounted on the smartphone 10, and is realized by, for example, a display.

Note that the operation unit 14 and the display unit 15 are integrated, for example, to constitute the above-described touch screen. Therefore, the operation unit 14 may be a software component displayed on the display unit 15, and may be, for example, a graphical user interface (GUI) that allows a recording editing application to display on the display unit 15 in an operable manner.

The storage unit 16 is realized by, for example, a semiconductor memory element such as a random access memory (RAM), a read only memory (ROM), or a flash memory. In the example illustrated in FIG. 2, the storage unit 16 stores application information 16a. The application information 16a is information including a program of the recording editing application, various parameters used during the operation of the recording editing application, and the like.

The control unit 17 is a controller, and is implemented by, for example, a central processing unit (CPU), a micro processing unit (MPU), or the like executing a program according to the embodiment of the present disclosure stored in the storage unit 16 using a RAM as a work area. Furthermore, the control unit 17 can be realized by, for example, an integrated circuit such as an application specific integrated circuit (ASIC) or a field programmable gate array (FPGA).

The control unit 17 includes an application execution unit 17a, a display control unit 17b, and a communication control unit 17c, and implements or executes a function and an action of information processing described below.

The application execution unit 17a reads the application information 16a stored in the storage unit 16 and executes the recording editing application. For example, the application execution unit 17a adds a track according to the operation content at the time of track addition in the recording editing application input from the operation unit 14.

Furthermore, the application execution unit 17a selects a track according to, for example, the operation content at the time of track selection in the recording editing application input from the operation unit 14. In addition, the application execution unit 17a changes the track type of the sound source data according to the operation content at the time of changing the track type in the recording editing application input from the operation unit 14, for example.

Furthermore, the application execution unit 17a executes the sound quality improvement processing according to the operation content at the time of executing the sound quality improvement processing in the recording editing application input from the operation unit 14, for example. Furthermore, the application execution unit 17a switches track non-display/display in accordance with, for example, operation content regarding track non-display/display switching in the recording editing application input from the operation unit 14. In addition, the application execution unit 17a executes the count-in function according to the operation content regarding the count-in function in the recording editing application input from the operation unit 14, for example.

Furthermore, the application execution unit 17a causes the display control unit 17b to perform display control of visual information including various UIs according to various operation contents at the time of execution of the recording editing application. Specific examples of the various UIs will be described later with reference to FIGS. 4 to 25.

The display control unit 17b performs display control of visual information on the display unit 15 when executing the recording editing application based on an instruction from the application execution unit 17a. The communication control unit 17c performs communication control on the server device 100 when executing the recording editing application.

The communication control unit 17c uploads, for example, sound source data which is a target of the sound quality improvement processing to the server device 100 via the communication unit 13. Furthermore, the communication control unit 17c downloads, from the server device 100 via the communication unit 13, for example, data on which the sound quality improvement processing has been performed in the server device 100.

### <<3. Configuration example of server device>>

Next, a configuration example of the server device 100 will be described. FIG. 3 is a block diagram illustrating a configuration example of the server device 100 according to the embodiment of the present disclosure.

As illustrated in FIG. 3, the server device 100 includes a communication unit 101, a storage unit 102, and a control unit 103.

Similarly to the communication unit 13 described above, the communication unit 101 is realized by a communication module or the like. The communication unit 101 is connected to the network N in a wired or wireless manner to realize communication with the smartphone 10 via the network N.

Similarly to the storage unit 16 described above, the storage unit 102 is realized by, for example, a semiconductor memory element such as a RAM, a ROM, or a flash memory. In addition, the storage unit 102 is realized by a disk device such as a hard disk device or an optical disk device. In the example illustrated in FIG. 3, the storage unit 102 stores a sound quality improvement processing model 102a.

The sound quality improvement processing model 102a is, as described above, a deep neural network (DNN) model learned using a deep learning algorithm, for example. Note that the learning algorithm of the sound quality improvement processing model 102a is not limited to deep learning. The sound quality improvement processing model 102a is read by a sound quality improvement processing unit 103b to be described later, and when sound source data to be processed is input, the sound quality improvement processing model performs sound quality improvement processing on the sound source data with designated setting contents (options), and outputs the data subjected to the sound quality improvement processing.

Similarly to the control unit 17 described above, the control unit 103 is a controller, and is implemented by, for example, a CPU, an MPU, or the like executing various programs (not illustrated) stored in the storage unit 102 using a RAM as a work area. Furthermore, the control unit 103 can be realized by, for example, an integrated circuit such as an ASIC or an FPGA.

The control unit 103 includes an acquisition unit 103a, a sound quality improvement processing unit 103b, and a transmission unit 103c, and implements or executes a function and an action of information processing described below.

The acquisition unit 103a acquires the option of the sound quality improvement processing designated in the smartphone 10 and the sound source data to be processed via the communication unit 101. In addition, the acquisition unit 103a outputs the acquired data to the sound quality improvement processing unit 103b.

The sound quality improvement processing unit 103b reads the sound quality improvement processing model 102a from the storage unit 102, and inputs each data received from the acquisition unit 103a to the sound quality improvement processing model 102a. Furthermore, the sound quality improvement processing unit 103b acquires the data subjected to the sound quality improvement processing output from the sound quality improvement processing model 102a, and outputs the data to the transmission unit 103c.

The transmission unit 103c transmits the data subjected to the sound quality improvement processing received from the sound quality improvement processing unit 103b to the smartphone 10 via the communication unit 101.

### <<4. UI Example in Recording Editing Application>>

Next, various UI examples in the recording editing application according to the embodiment of the present disclosure will be sequentially described with reference to FIGS. 4 to 25.

### <4-1. At the time of track addition>

First, a UI example at the time of track addition on the recording screen of the recording editing application will be described. FIG. 4 is a diagram illustrating a UI example at the time of track addition.

When the recording editing application is activated, the display control unit 17b displays a recording screen selection button RB and an editing screen selection button EB as illustrated in FIG. 4. Then, when the user performs a touch operation on the recording screen selection button RB, the display control unit 17b displays a track addition screen including a track addition button A1 as illustrated in the left diagram of FIG. 4.

Then, when the user performs a touch operation on the track addition button A1, the display control unit 17b displays a track type selection screen A2 as illustrated in the center diagram of FIG. 4. In the recording editing application according to the embodiment of the present disclosure, for example, options and the like that can be designated in the sound quality improvement processing are different for each musical instrument serving as a sound source, and thus the user is caused to select the track type on the track type selection screen A2 at the time of track addition.

Here, as illustrated in the center diagram of FIG. 4, it is assumed that the user selects a track type T3. The track type T3 corresponds to a type of sound source data including a plurality of sound sources of a vocal and a guitar (see "Vocals & Guitar" in the figure) as sound sources. That is, the track type T3 is designated when a recording mode for simultaneously recording a plurality of musical instruments is selected.

The sound source data recorded in such a recording mode can be separated into the sound source data of the sound for each musical instrument after recording by executing the above-described "audio separation" which is one of options of the sound quality improvement processing.

Then, when the track type T3 is selected, the display control unit 17b erases the track type selection screen A2 and displays an icon I3 corresponding to the track type T3 as illustrated in the right diagram of FIG. 4. Then, as illustrated in the right diagram of FIG. 4, when the user touches a recording button SB, the application execution unit 17a starts the recording operation, and the display control unit 17b performs real-time display of the input waveform corresponding to the recording operation.

### <4-2. At the time of track selection>

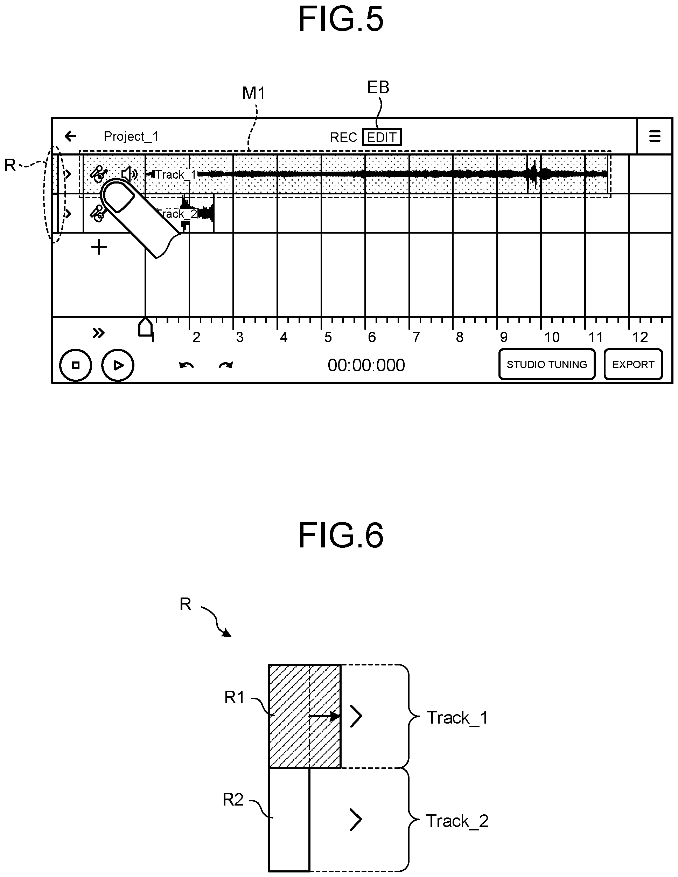

Next, a UI example at the time of track selection on an editing screen of the recording editing application will be described. FIGS. 5 to 7 are diagrams (part 1 to part 3) illustrating UI examples at the time of track selection. When the user touches the editing screen selection button EB, the display control unit 17b displays the editing screen as illustrated in FIG. 5.

On the editing screen, as illustrated in FIG. 5, sound source data that is a candidate for an editing target is displayed in a list. Here, when the user performs a touch operation on the sound source data to be edited, the corresponding sound source data is selected, and the selected sound source data is highlighted as illustrated in an M1 portion in the drawing. That is, the display control unit 17b clearly indicates the sound source data selected by the highlight display.

Note that, as illustrated in FIG. 5, a tag R is added to each sound source data and displayed. The display control unit 17b can clearly indicate the selected sound source data by changing the display of the tag R. For example, as illustrated in FIG. 5, it is assumed that sound source data "Track_1" is selected.

Then, as illustrated in FIG. 6, for example, the display control unit 17b enlarges and displays the tag R1 of "Track_1" so as to extend in the row direction of the row in which "Track_1" is displayed. The display control unit 17b can clearly indicate the selected sound source data by the enlarged display of the tag R1.

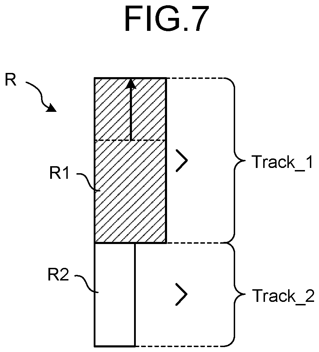

Furthermore, as illustrated in FIG. 7, the display control unit 17b can also perform, for example, enlarged display of enlarging the entire width of the row in which "Track_1" including the tag R1 of "Track_1" is displayed. The display control unit 17b can clearly indicate the selected sound source data also by enlarged display of expanding the entire width of the row. Note that, in a case where the selection of the sound source data is released, the display control unit 17b cancels each enlarged display illustrated in FIGS. 6 and 7 and returns the display to the state before the selection.

### <4-3. When track type is changed>

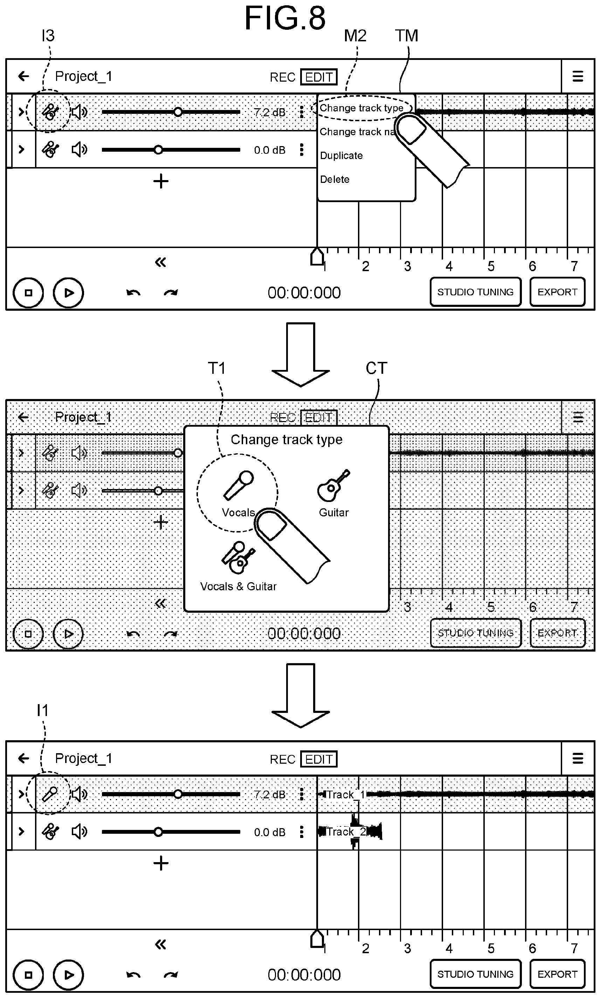

Next, a UI example when the track type is changed on the editing screen will be described. FIG. 8 is a diagram illustrating a UI example when the track type is changed. When the user performs a predetermined touch operation on the sound source data selected on the editing screen, the display control unit 17b displays a track menu TM capable of performing a predetermined operation on the corresponding sound source data, as illustrated in FIG. 8.

In the track menu TM, "Change track type", "Change track name", "Duplicate", and "Delete" are available.

In the example of FIG. 8, it is assumed that the user selects the sound source data "Track_1" of the track type T3 corresponding to the icon I3 and further selects "Change track type" as illustrated in a portion M2 in the figure.

Then, the display control unit 17b displays the Change track type screen CT as illustrated in the center diagram of FIG. 8. Here, it is assumed that the user selects the track type T1 as illustrated in the drawing. The track type T1 corresponds to sound source data of a vocal (see "Vocals" in the drawing) which is a single sound source.

Then, as illustrated in the lower diagram of FIG. 8, the display control unit 17b displays the icon I1 corresponding to the track type T1 for the corresponding "Track_1". Note that, when the track type of the single sound source is changed to the track type T1, the above-described "audio separation" cannot be selected as an option of the sound quality improvement processing. That is, the user can arbitrarily change the options selectable in the sound quality improvement processing by changing the track type illustrated in FIG. 8.

### <4-4. At the time of executing sound quality improvement processing>

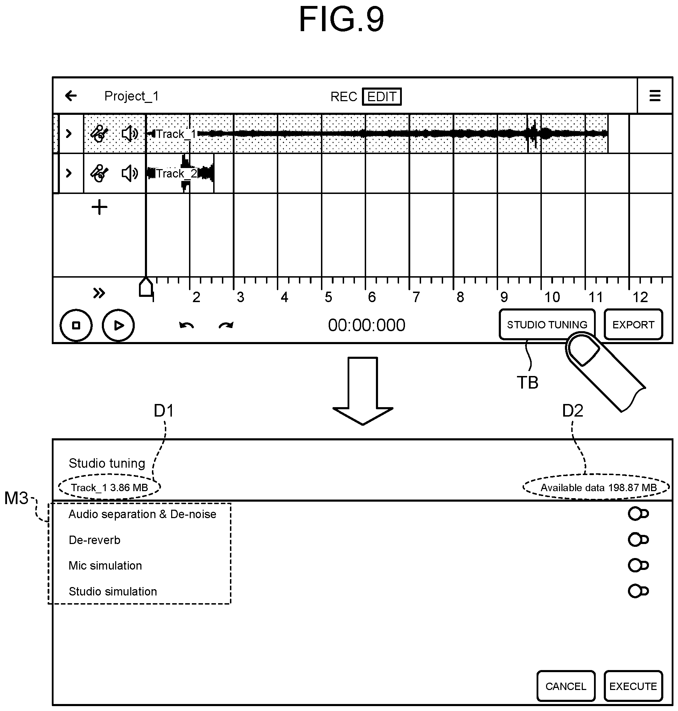

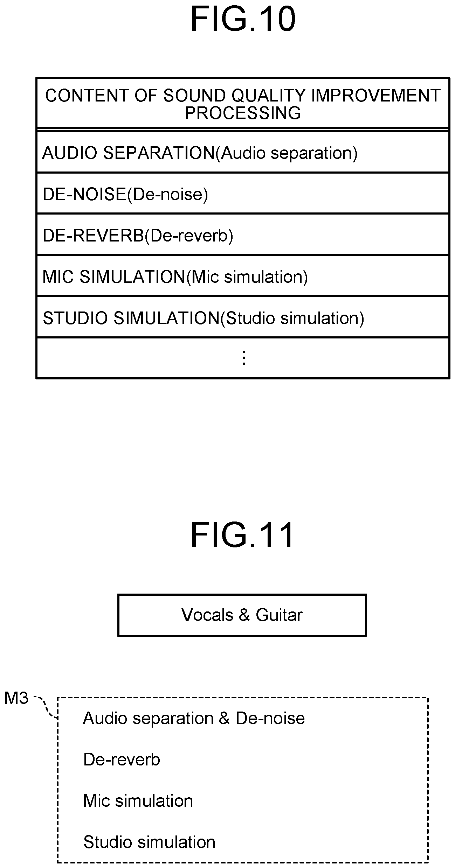

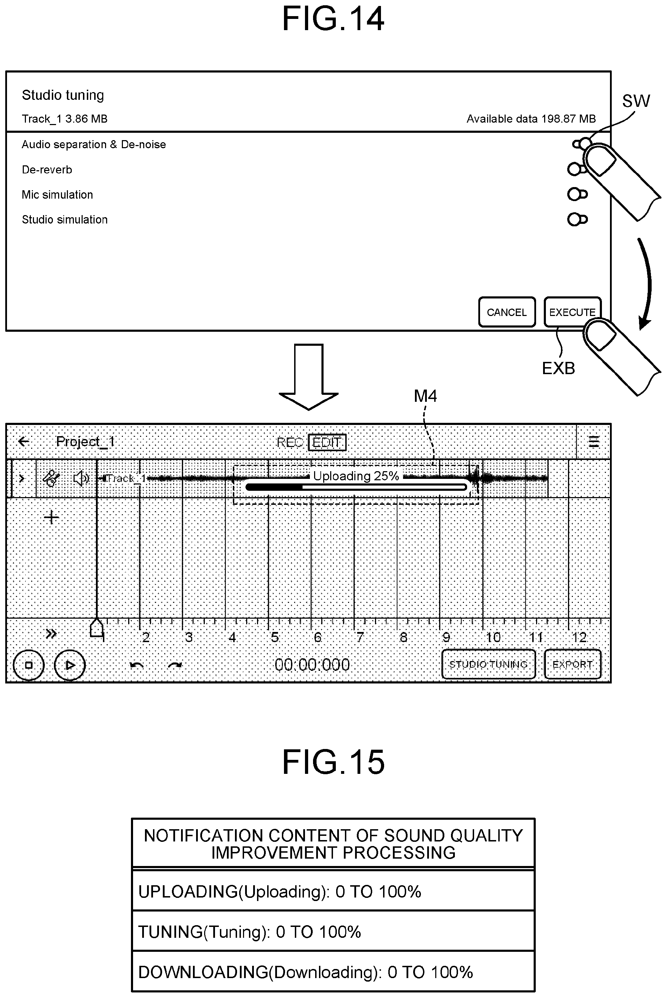

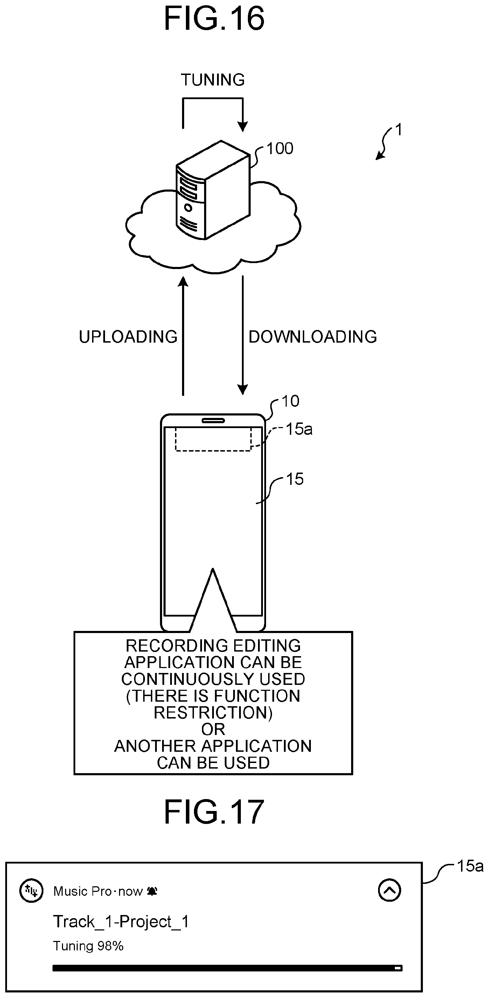

Next, a UI example at the time of executing sound quality improvement processing on the editing screen will be described. FIG. 9 is a diagram (part 1) illustrating a UI example at the time of executing the sound quality improvement processing. Furthermore, FIG. 10 is a diagram illustrating the contents of the sound quality improvement processing. FIGS. 11 to 14 are diagrams (part 2) to (part 5) illustrating UI examples at the time of executing the sound quality improvement processing. Furthermore, FIG. 15 is a diagram illustrating notification contents of the sound quality improvement processing. Furthermore, FIG. 16 is a diagram illustrating a state in which the sound quality improvement processing is being executed.

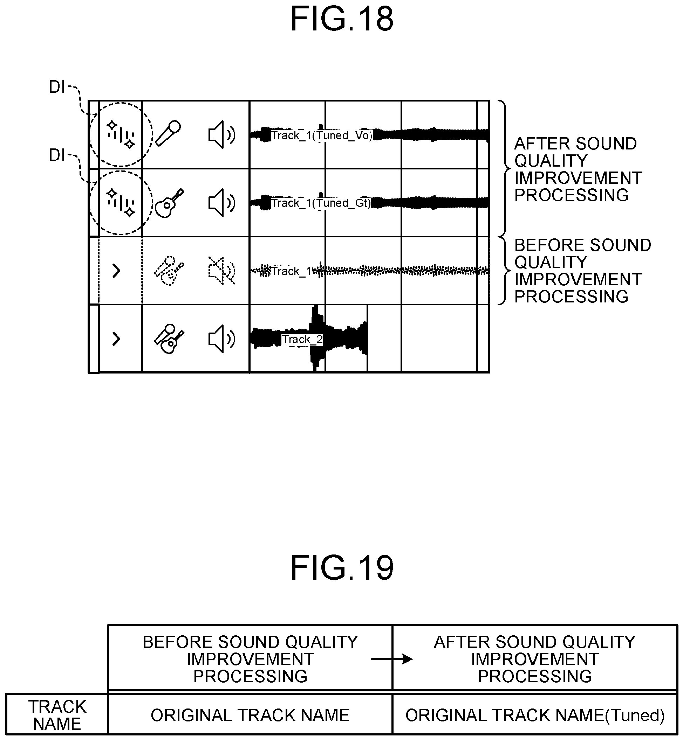

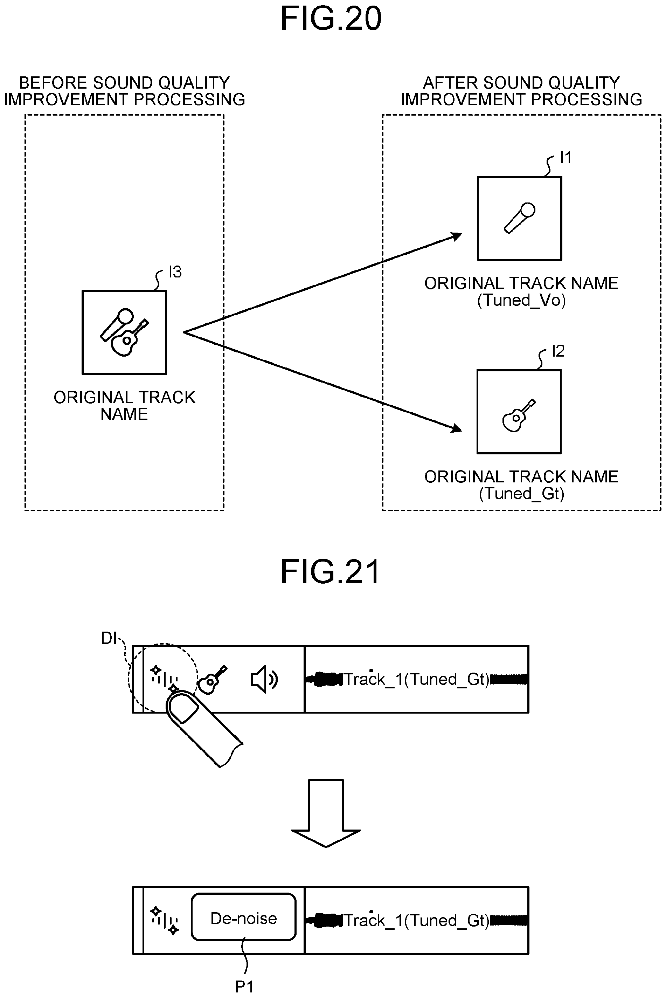

FIGS. 17 and 18 are diagrams (part 6) and (part 7) illustrating a UI example at the time of executing the sound quality improvement processing. FIGS. 19 and 20 are explanatory diagrams (part 1) and (part 2) of a naming rule of a track name. Furthermore, FIG. 21 is a diagram (part 8) illustrating a UI example at the time of executing the sound quality improvement processing.

As illustrated in the upper diagram of FIG. 9, when the user performs a tap operation on a sound quality improvement (STUDIO TUNING) button TB on the editing screen in a state where the user selects one piece of the sound source data ("Track_1" in this example), the display control unit 17b displays a sound quality improvement processing executing screen as illustrated in the lower diagram of FIG. 9.

On the sound quality improvement processing executing screen, in addition to the data capacity of the selected sound source data as illustrated in a D1 portion in the drawing, the remaining available data capacity is displayed as illustrated in a D2 portion. Furthermore, on the sound quality improvement processing executing screen, a menu M3 for sound quality improvement indicating options selectable in the sound quality improvement processing is displayed.

As illustrated in FIG. 10, in the embodiment of the present disclosure, it is possible to execute sound quality improvement processing such as "audio separation", "de-noise", "de-reverb", "mic simulation", and "studio simulation" described above.

As described with reference to FIG. 1, in the information processing method according to the embodiment of the present disclosure, the sound quality improvement processing is executed on the sound source data acquired from the smartphone 10 by the AI processing using the sound quality improvement processing model 102a. As a result, the sound source data can be up-converted to sound quality of professional studio quality.

As for "audio separation", if anything other than the points already described is supplemented, the smartphone 10 side can individually listen to the separated sounds or perform mixing with an arbitrary volume balance of the user.

Furthermore, as a supplement to "de-noise", by using the technology of "audio separation", for example, any other sound can be separated and removed as noise from the sound of the vocal or the guitar included in the sound source data of the track type T3.

Furthermore, as a supplement to "de-reverb", reverb (reverberation of a room) in a general house can be suppressed and removed by AI processing, and sound quality can be changed to sound quality like studio recording material.

In addition, as a supplement to "mic simulation", it is possible to reproduce the frequency characteristics of a high-performance vacuum tube condenser microphone.

Furthermore, for "studio simulation", a unique reverberation of a recording studio or the like can be added without adding a reverb as an effect.

Then, the display control unit 17b variably displays the menu M3 for sound quality improvement in conjunction with the type of the selected sound source data. For example, in a case where the sound source data of the track type T3 is selected, the display control unit 17b displays a menu M3 from which "Audio Separation & De-noise", "De-reverb", "Mic Simulation", and "Studio simulation" can be selected, as illustrated in FIG. 11.

Note that, in the "audio separation", the sound source data is separated into the selected track type and the others. Therefore, in the case of the track type T3, the sound source data is separated into a vocal sound, a guitar sound, and other sounds. In the embodiment of the present disclosure, the vocal and the guitar are exemplified as the plurality of sound sources, but other musical instruments such as a piano and a drum can also be set as the separation target by being set as the learning target of the sound quality improvement processing model 102a.

Then, the server device 100 transmits only data of the sound indicated by the selected track type among the separated sounds to the smartphone 10. Since noise is included in other sounds, noise is also removed by performing "audio separation". Therefore, as illustrated in FIG. 11, the display control unit 17b displays "Audio Separation & De-noise" as an option name selectable in the menu M3.

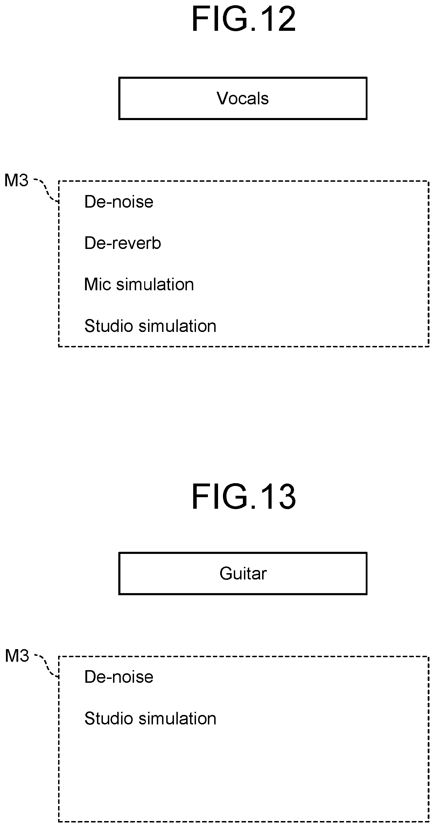

Similarly, for example, in a case where the sound source data of "Vocals" which is the track type T1 described above is selected, the display control unit 17b displays the menu M3 from which "De-noise", "De-reverb", "Mic Simulation", and "Studio simulation" are selectable, as illustrated in FIG. 12.

Even in a case where the track type is a single sound source, the server device 100 uses the technology of "audio separation" for "de-noise" as described above. However, the server device 100 only transmits the data of the sound of the single sound source to the smartphone 10, and does not perform the transmission divided into a plurality of times. Therefore, the option name is not "Audio separation & De-noise" but "De-noise".

Similarly, for example, in a case where the sound source data of the track type "Guitar" is selected, the display control unit 17b displays the menu M3 from which "De-noise" and "Studio simulation" are selectable, as illustrated in FIG. 13. For example, in a case where the sound source data of the track type "Guitar" is not the data recorded via the microphone 11 but is sound source data or the like purchased by the user, "De-reverb" and "Mic Simulation" can be made non-display as it is unnecessary to select as illustrated in FIG. 13.

Then, as illustrated in FIG. 14, when the user designates an option by a selection switch SW on the sound quality improvement processing executing screen and performs a touch operation on the execution (EXECUTE) button EXB, the sound quality improvement processing is executed. The display control unit 17b notifies the progress status of the sound quality improvement processing as indicated by a portion M4 in the drawing during the execution of the sound quality improvement processing.

As illustrated in FIG. 15, the display control unit 17b displays "Uploading", "Tuning", "Downloading", and an indicator indicating the progress as the notification contents. In addition, although not illustrated, a completion notification is displayed after completion.

"Uploading", "Tuning", and "Downloading" correspond to the respective processes illustrated in FIG. 16. Note that, since the sound quality improvement processing takes time, in the smartphone 10, the recording editing application can be continuously used although there is a function restriction as illustrated in FIG. 16. In addition, other applications can be used. For example, in a case where the user waits for completion of the sound quality improvement processing using another application, the progress status of the sound quality improvement processing is displayed on a notification panel 15a of the display unit 15 as illustrated in FIGS. 15 and 16.

Furthermore, in a case where the user waits for completion of the sound quality improvement processing continuously using the recording editing application, the user can record and edit tracks other than the track being subjected to the sound quality improvement processing. In addition, for the track being subjected to the sound quality improvement processing, only an operation related to reproduction can be performed. The operation related to reproduction includes reproduction, mute, volume adjustment, or the like. Therefore, editing such as trimming or compounding cannot be performed on the track being subjected to the sound quality improvement processing. As a result, it is possible to ensure consistency of the track which is a target of the sound quality improvement processing.

Then, when the sound quality improvement processing is completed, as illustrated in FIG. 18, each track subjected to the sound quality improvement processing is displayed in a list on the editing screen of the recording editing application. At this time, the display control unit 17b displays each track subjected to the sound quality improvement processing at a position above the track before the sound quality improvement processing. The display control unit 17b also displays an icon DI indicating that the sound quality improvement processing has been performed.

Furthermore, the display control unit 17b grays out the display of the track before the sound quality improvement processing, for example. In addition, the track before the sound quality improvement processing is muted.

Since the track before the sound quality improvement processing is basically unnecessary, the track is automatically muted after the sound quality improvement processing. Note that the user can switch the mute state between the track subjected to the sound quality improvement processing and the track before the sound quality improvement processing to perform listening comparison. In addition, in a case where the user does not like the track subjected to the sound quality improvement processing, the user can edit the track subjected to the sound quality improvement processing after muting the track before the sound quality improvement processing or execute the sound quality improvement processing again. When executing the sound quality improvement processing again, the user can change the option to be designated from the previous option.

In addition, the application execution unit 17a names a track name different from that before the sound quality improvement processing with respect to the track subjected to the sound quality improvement processing. As illustrated in FIG. 19, the basic naming rule is obtained by adding (Tuned) to the original track name before the sound quality improvement processing.

Then, in a case where the "audio separation" is performed, the track name is named in a form in which the above-described (Tuned) is in the form of (Tuned_sound source name). For example, in a case where the sound source data of the track type T3 is subjected to the audio separation, as illustrated in FIG. 20, the track name of the track of the vocal sound for which the sound quality improvement processing has been performed is "original track name (Tuned_Vo)". In addition, the track name of the sound track of the guitar that is subjected to the sound quality improvement processing is "original track name (Tuned_Gt)".

In this way, by changing the track names before the sound quality improvement processing and after the sound quality improvement processing, for example, when each track is output as a file, the file name is set to the format of track name + extension, so that it is possible to immediately identify whether or not the sound quality improvement processing has been performed only by the file name even after the file output.

Furthermore, as illustrated in FIG. 18, the display control unit 17b superimposes and displays the named track name on the track subjected to the sound quality improvement processing, and displays an icon corresponding to the track type subjected to the sound quality improvement processing.

In the case of the example of FIG. 20, the icon I3 displayed for the track before the sound quality improvement processing becomes the icons I1 and I2 in the respective tracks subjected to the sound quality improvement processing. In this manner, the display control unit 17b clearly indicates that the sound quality improvement processing has been performed, in particular, that the audio separation has been performed by the icon indicating the track type and the track name.

Furthermore, as illustrated in FIG. 21, in a case where the user performs a touch operation on the icon DI indicating that the sound quality improvement processing has been performed, the display control unit 17b displays a pop-up P1 indicating the content of the performed sound quality improvement processing. As a result, the user can immediately grasp the content of the sound quality improvement processing performed on the corresponding track by a simple operation of touching the icon DI.

### <4-5. At the time of non-display/display switching>

Note that, in a portable information processing apparatus such as the smartphone 10, the display area of the display unit 15 is limited, and thus, there is a case where the user wants to make unnecessary tracks non-display for the time being although the tracks are not deleted. In such a case, the recording editing application can display a track non-display/display switching screen.

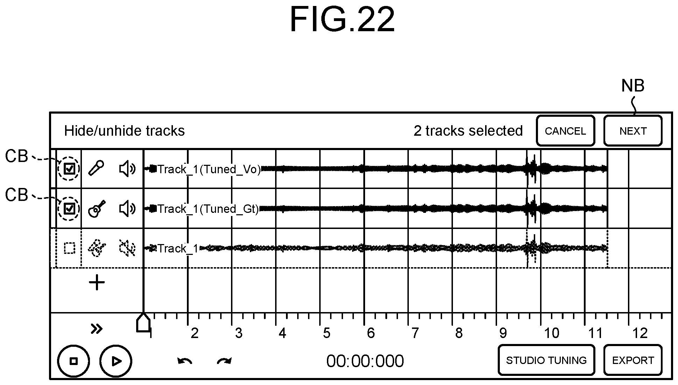

FIG. 22 is a diagram illustrating a UI example at the time of non-display/display switching. As illustrated in FIG. 22, on the non-display/display switching screen, tracks that can be editing targets of the recording editing application are displayed in a list.

A check box CB is provided in each list. On the non-display/display switching screen, the user selects only a track to be displayed by the check box CB and performs a touch operation on a NEXT button NB. Then, thereafter, the display control unit 17b sets only the track selected in the check box CB as the display target, and makes the track that has not been selected non-display. The track made non-display is automatically muted, and is out of the reproduction target.

As a result, the user can arbitrarily and easily change the track list display on the display unit 15 so as to be easily viewable and easily edited.

### <4-6. Count-in function>

Furthermore, the recording editing application according to the embodiment of the present disclosure has a count-in function. The count-in function is a function of counting in synchronization with the start of recording on the recording screen. The recording editing application implements such a count-in function by performing count display on the display unit 15 and count output from the speaker 12.

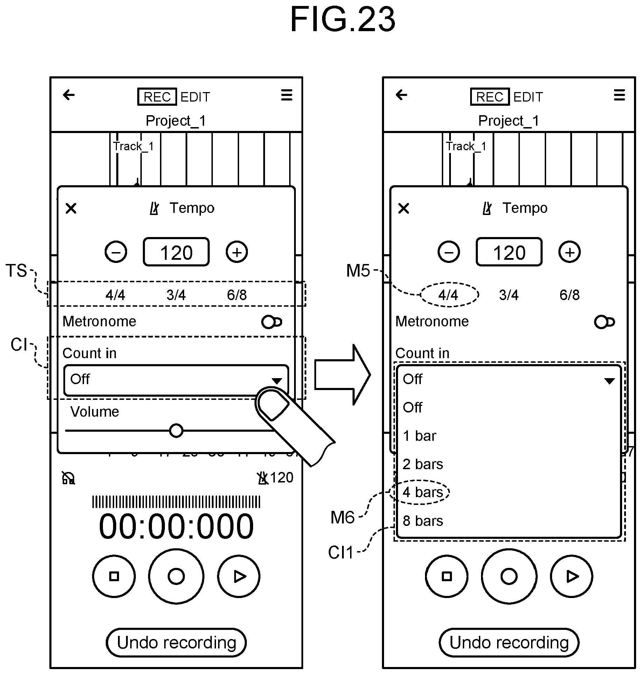

FIGS. 23 to 25 are diagrams (part 1) to (part 3) illustrating UI examples related to the count-in function. When the user designates use of the count-in function by a predetermined operation from the recording screen of the recording editing application, the display control unit 17b displays a setting screen of the count-in function as illustrated in FIG. 23.

The setting screen is provided with a tempo (see "Tempo" in the drawing) setting portion, a counting sound setting portion, a time setting portion TS, and a count-in length setting portion CI. The tempo can be set by specifying an arbitrary numerical value. As the counting sound, a counting sound by a metronome (see "Metronome" in the drawing), a counting sound by a drum stick, or the like can be selected.

Furthermore, the user can select and set a four/four time, a three/four time, a six/eight time, and the like from the setting portion TS. In addition, the user can select and set the number of bars indicating the length of the count-in from 1 bar or more, for example, 1 bar, 2 bars, 4 bars, or 8 bars from a setting portion CI1 expanded by performing a touch operation on the setting portion CI.

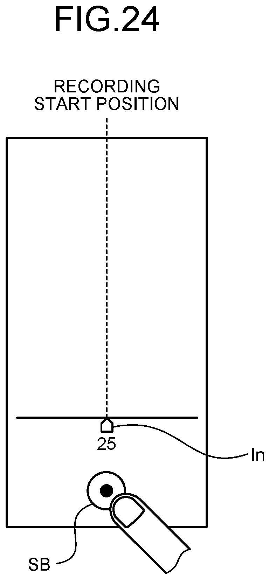

Here, it is assumed that the user selects four/four time as the time and 4 bars as the number of bars as illustrated in parts M5 and M6 of FIG. 23. Then, as illustrated in FIG. 24, it is assumed that the user positions a music position cursor In at a time stamp "25" on the recording screen and performs a touch operation on the recording button SB with this position as a recording start position.

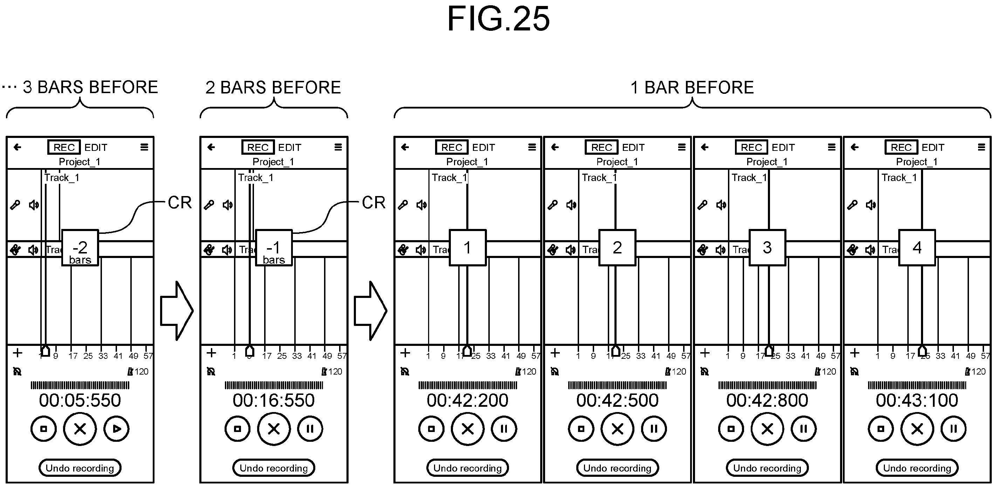

Then, as illustrated in FIG. 25, the display control unit 17b automatically skips the music position cursor In to a corresponding position 4 bars before the time stamp "25", and starts counting in from the corresponding position.

That is, the display control unit 17b moves the music position cursor In according to the set tempo, and performs count display in the count display area CR. The display control unit 17b performs count-up display from a negative value such as "-2", "-1", ... in the count display area CR until the music position cursor In reaches 1 bar immediately before the recording start position. As illustrated in FIG. 25, "-2" corresponds to 3 bars before, and "-1" corresponds to 2 bars before.

Furthermore, the display control unit 17b performs count-up display from "1" in the count display area CR 1 bar before the recording start position. In the case of the four/four time setting illustrated in FIG. 23, the display control unit 17b performs count-up display from 1 to 4 of "1", "2", "3", and "4" in accordance with the tempo as illustrated in FIG. 25.

Note that the application execution unit 17a causes the speaker 12 to output a counting sound in synchronization with the count up for each count-up display 1 bar before performed by the display control unit 17b. Then, the recording is started from the time point when the music position cursor In reaches the recording start position.

According to such a count-in function, the user can set the count-in function with a high degree of freedom, for example, by selecting the length of the count-in over 2 bars according to the way of taking the rhythm of the user. Furthermore, the user can take the timing to start recording at a desired timing while using the count-in function according to the setting.

### <<5. Processing sequence>>

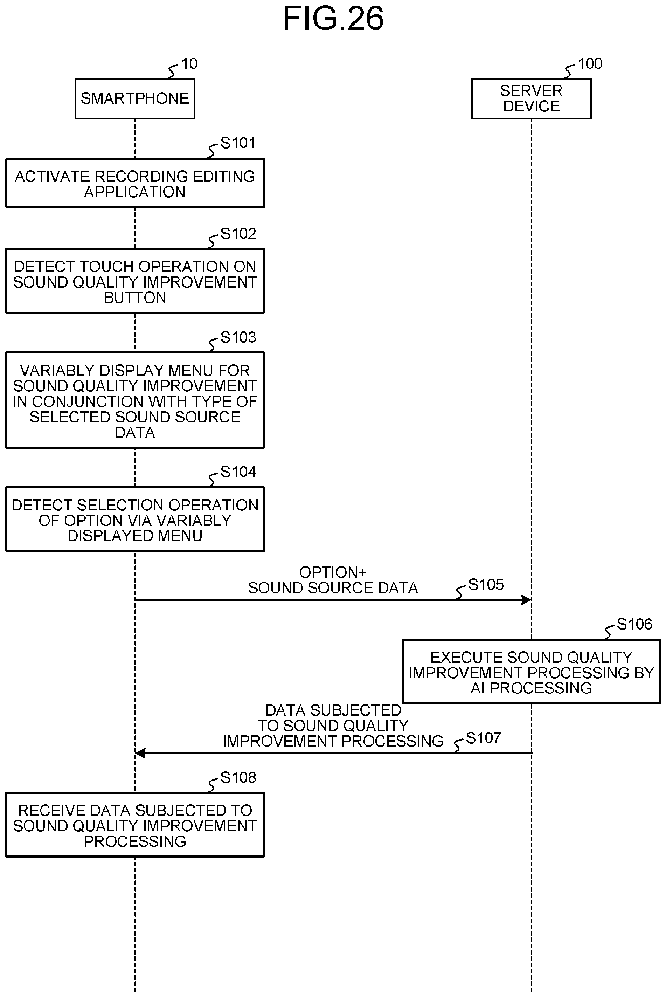

Next, a processing sequence in a case where the information processing system 1 according to the embodiment of the present disclosure performs sound quality improvement processing will be described with reference to FIG. 26. FIG. 26 is a diagram illustrating a processing sequence in a case where the information processing system 1 performs the sound quality improvement processing.

As illustrated in FIG. 26, the smartphone 10 first activates the recording editing application (Step S101). Then, the smartphone 10 detects a touch operation on a sound quality improvement button TB on the editing screen of the recording editing application (Step S102).

Then, the smartphone 10 variably displays the menu M3 for sound quality improvement in conjunction with the type of sound source data selected at the time of the touch operation on the sound quality improvement button TB (Step S103).

Subsequently, the smartphone 10 detects a selection operation of an option of the sound quality improvement processing via the variably displayed menu M3 (Step S104). Then, the smartphone 10 transmits the selected option and the sound source data to the server device 100 (Step S105).

The server device 100 acquires the data transmitted from the smartphone 10 in Step S105, and executes sound quality improvement processing by AI processing based on the data (Step S106).

Then, when the sound quality improvement processing is completed, the server device 100 transmits the data subjected to the sound quality improvement processing to the smartphone 10 (Step S107). Note that, in a case where the audio separation processing is included in the executed sound quality improvement processing, the server device 100 transmits data subjected to the sound quality improvement processing by the separated sound sources to the smartphone 10. At this time, data separated as other sounds other than the sound source is not transmitted.

Then, the smartphone 10 receives the data subjected to the sound quality improvement processing transmitted from the server device 100 (Step S108). The user checks the data subjected to the sound quality improvement processing, and performs editing and the like as necessary.

Furthermore, in a case where the user desires to perform the sound quality improvement processing again, if the user selects sound source data to be processed on the editing screen and performs a touch operation on the sound quality improvement button TB, the smartphone 10 repeats the processing from Step S102.

### <<6. Modification>>

Meanwhile, the embodiment of the present disclosure described above can include several modifications.

In the embodiment of the present disclosure described above, the recording editing application records the sound collected by the microphone 11 included in the smartphone 10, but the microphone used in the recording function may be an external microphone connected to the smartphone 10. Similarly, the speaker used by the recording editing application may be an external speaker connected to the smartphone 10 instead of the speaker 12 included in the smartphone 10.

Furthermore, in the above-described embodiment, the server device 100 executes the sound quality improvement processing using the sound quality improvement processing model 102a, but the smartphone 10 may execute such sound quality improvement processing.

In such a case, the server device 100 functions as a learning device that learns the sound quality improvement processing model 102a. Furthermore, the smartphone 10 receives distribution of the learned sound quality improvement processing model 102a from the server device 100, and holds the sound quality improvement processing model 102a in the smartphone 10.

Then, in a case where the user performs an operation of executing the sound quality improvement processing, the smartphone 10 executes the sound quality improvement processing using the held sound quality improvement processing model 102a. In such a case, there is an advantage that the response of the sound quality improvement processing can be improved. On the other hand, the smartphone 10 needs to have processing capability capable of executing sound quality improvement processing.

Furthermore, in the above-described embodiment, "audio separation", "de-noise", "de-reverb", "mic simulation", and "studio simulation" are exemplified as the sound quality improvement processing, but the sound quality improvement processing is naturally not limited thereto.

For example, the "mic simulation" may be processing in which the user selects one microphone from a plurality of high-performance microphones and reproduces the microphone characteristic of the selected microphone. Similarly, the "studio simulation" may be processing in which the user selects one studio from among a plurality of famous studios and adds a unique reverberation of the selected studio. Furthermore, instead of a studio, the user may select one concert venue from among a plurality of famous concert venues, and sound quality improvement processing such as "concert simulation" that adds a unique reverberation of the selected concert venue may be performed.

Among the processing described in the embodiments of the present disclosure described above, all or a part of the processing described as being performed automatically can be performed manually, or all or a part of the processing described as being performed manually can be performed automatically by a known method. In addition, the processing procedure, specific name, and information including various types of data and parameters illustrated in the document and the drawings can be arbitrarily changed unless otherwise specified. For example, the various types of information illustrated in each figure are not limited to the illustrated information.

In addition, each component of each device illustrated in the drawings is functionally conceptual, and is not necessarily physically configured as illustrated in the drawings. That is, a specific form of distribution and integration of each device is not limited to the illustrated form, and all or a part thereof can be functionally or physically distributed and integrated in an arbitrary unit according to various loads, usage conditions, and the like.

In addition, the above-described embodiments can be appropriately combined in a region in which the processing contents do not contradict each other. In addition, the order of the steps illustrated in the sequence diagram or the flowchart of the present embodiment can be changed as appropriate.

### <<7. Hardware Configuration>>

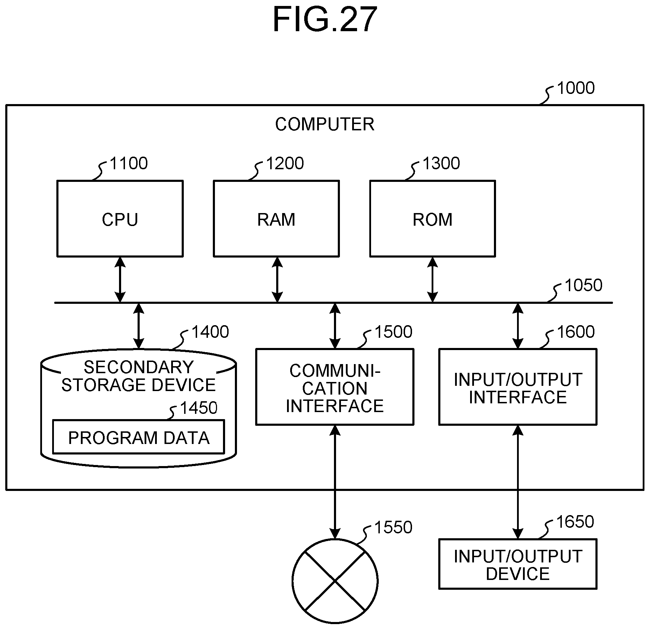

Furthermore, the smartphone 10 and the server device 100 according to the embodiment of the present disclosure described above are realized by a computer 1000 having a configuration as illustrated in FIG. 27, for example. The smartphone 10 will be described as an example. FIG. 27 is a hardware configuration diagram illustrating an example of the computer 1000 that implements the functions of the smartphone 10. The computer 1000 includes a CPU 1100, a RAM 1200, a ROM 1300, a secondary storage device 1400, a communication interface 1500, and an input/output interface 1600. Each unit of the computer 1000 is connected by a bus 1050.

The CPU 1100 operates based on a program stored in the ROM 1300 or the secondary storage device 1400, and controls each unit. For example, the CPU 1100 develops the program stored in the ROM 1300 or the secondary storage device 1400 in the RAM 1200, and executes processing corresponding to various programs.

The ROM 1300 stores a boot program such as a basic input output system (BIOS) executed by the CPU 1100 when the computer 1000 is activated, a program depending on hardware of the computer 1000, and the like.

The secondary storage device 1400 is a computer-readable recording medium that non-transiently records a program executed by the CPU 1100, data used by the program, and the like. Specifically, the secondary storage device 1400 is a recording medium that records a program according to the embodiment of the present disclosure corresponding to the application information 16a that is an example of the program data 1450.

The communication interface 1500 is an interface for the computer 1000 to connect to an external network 1550. For example, the CPU 1100 receives data from another device or transmits data generated by the CPU 1100 to another device via the communication interface 1500.

The input/output interface 1600 is an interface for connecting an input/output device 1650 and the computer 1000. For example, the CPU 1100 receives data from an input device such as a microphone or a touch panel via the input/output interface 1600. In addition, the CPU 1100 transmits data to an output device such as a display or a speaker via the input/output interface 1600. Furthermore, the input/output interface 1600 may function as a media interface that reads a program or the like recorded in a predetermined recording medium (medium). The medium is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, in a case where the computer 1000 functions as the smartphone 10 according to the embodiment of the present disclosure, the CPU 1100 of the computer 1000 implements the function of the control unit 17 by executing a program loaded on the RAM 1200. In addition, the secondary storage device 1400 stores a program according to the present disclosure and data in the storage unit 16. Note that the CPU 1100 reads the program data 1450 from the secondary storage device 1400 and executes the program data, but as another example, these programs may be acquired from another device via the external network 1550.

### <<8. Conclusion>>

As described above, according to an embodiment of the present disclosure, the smartphone 10 (corresponding to an example of an "information processing apparatus") includes: the application execution unit 17a provided to be able to execute a recording editing application (corresponding to an example of an "application having a recording function and an editing function of sound source data "); and the display control unit 17b that causes a display unit 15 to variably display a menu M3 for sound quality improvement in conjunction with a type of the sound source data, the sound source data being selected by a user as a target for the sound quality improvement, in a case where the user selects the sound source data to be subjected to sound quality improvement via the recording editing application. As a result, it is possible to improve convenience when the user produces the music content.

Although the embodiments of the present disclosure have been described above, the technical scope of the present disclosure is not limited to the above-described embodiments as it is, and various modifications can be made without departing from the gist of the present disclosure. In addition, components of different embodiments and modifications may be appropriately combined.

Furthermore, the effects of each embodiment described in the present specification are merely examples and are not limited, and other effects may be provided.

Note that the present technology can also have the following configurations.
(1) An information processing apparatus comprising:
   an application execution unit provided to be able to execute an application having a recording function and an editing function of sound source data; and
   a display control unit that causes a display unit to variably display a menu for sound quality improvement in conjunction with a type of the sound source data, the sound source data being selected by a user as a target for the sound quality improvement via the application.
(2) The information processing apparatus according to (1), wherein
   the display control unit clearly indicates the selected sound source data on the display unit when the sound source data is selected via the application.
(3) The information processing apparatus according to (2), wherein
   the display control unit displays the sound source data in a list on the display unit together with a tag added to the sound source data, and when the sound source data is selected via the application, enlarges and displays the tag added to the selected sound source data so as to extend in a row direction of a row in which the sound source data is displayed.
(4) The information processing apparatus according to (2) or (3), wherein
   the display control unit displays the sound source data in a list on the display unit, and when the sound source data is selected via the application, enlarges and displays a row in which the selected sound source data is displayed so as to expand an entire width of the row.
(5) The information processing apparatus according to any one of (1) to (4), wherein
   the application execution unit is able to set a first type indicating that sounds of a plurality of different sound sources are included to the sound source data based on selection of a user, and
   the display control unit displays the sound source data in a list on the display unit together with an icon indicating that the first type is set, when the first type is set to the sound source data.
(6) The information processing apparatus according to (5), wherein
   sound quality improvement processing for performing the sound quality improvement includes audio separation processing of separating an arbitrary sound source portion from the sound source data when a plurality of different sound sources are included in the sound source data, and
   the display control unit causes the display unit to display the menu for sound quality improvement so as to be able to select the audio separation processing only when the first type is set to the sound source data.
(7) The information processing apparatus according to (6), wherein
   the sound quality improvement processing includes de-noise processing of removing a portion other than the arbitrary sound source portion as noise using the audio separation processing, and
   the display control unit causes the display unit to display the menu for sound quality improvement so as to be able to simultaneously select the audio separation processing and the de-noise processing when the first type is set to the sound source data.
(8) The information processing apparatus according to (7), wherein
   the display control unit causes the display unit to display the menu for sound quality improvement so as to be able to independently select the de-noise processing when another type other than the first type is set to the sound source data.
(9) The information processing apparatus according to (7) or (8), wherein
   the display control unit displays data subjected to the sound quality improvement processing in a list on the display unit together with an icon indicating that the sound quality improvement processing has been performed, when the data subjected to the sound quality improvement processing is acquired.
(10) An information processing method, comprising:
   executing an application having a recording function and an editing function of a sound source data; and
   causing a display unit to variably display a menu for sound quality improvement in conjunction with a type of the sound source data, the sound source data being selected by a user as a target for the sound quality improvement via the application.
(11) A program for causing a computer to perform:
   executing an application having a recording function and an editing function of a sound source data; and
   causing a display unit to variably display a menu for sound quality improvement in conjunction with a type of the sound source data, the sound source data being selected by a user as a target for the sound quality improvement via the application.

### Reference Signs List

- 1: INFORMATION PROCESSING SYSTEM

- 10: SMARTPHONE
- 11: MICROPHONE
- 12: SPEAKER
- 13: COMMUNICATION UNIT
- 14: OPERATION UNIT
- 15: DISPLAY UNIT
- 15a: NOTIFICATION PANEL
- 16: STORAGE UNIT
- 16a: APPLICATION INFORMATION
- 17: CONTROL UNIT
- 17a: APPLICATION EXECUTION UNIT
- 17b: DISPLAY CONTROL UNIT
- 17c: COMMUNICATION CONTROL UNIT
- 100: SERVER DEVICE
- 101: COMMUNICATION UNIT
- 102: STORAGE UNIT
- 102a: SOUND QUALITY IMPROVEMENT PROCESSING MODEL
- 103: CONTROL UNIT
- 103a: ACQUISITION UNIT
- 103b: SOUND QUALITY IMPROVEMENT PROCESSING UNIT
- 103c: TRANSMISSION UNIT

## Claims

1. An information processing apparatus comprising:
an application execution unit provided to be able to execute an application having a recording function and an editing function of sound source data; and
a display control unit that causes a display unit to variably display a menu for sound quality improvement in conjunction with a type of the sound source data, the sound source data being selected by a user as a target for the sound quality improvement via the application.

2. The information processing apparatus according to claim 1, wherein the display control unit clearly indicates the selected sound source data on the display unit when the sound source data is selected via the application.

3. The information processing apparatus according to claim 2, wherein the display control unit displays the sound source data in a list on the display unit together with a tag added to the sound source data, and when the sound source data is selected via the application, enlarges and displays the tag added to the selected sound source data so as to extend in a row direction of a row in which the sound source data is displayed.

4. The information processing apparatus according to claim 2, wherein the display control unit displays the sound source data in a list on the display unit, and when the sound source data is selected via the application, enlarges and displays a row in which the selected sound source data is displayed so as to expand an entire width of the row.

5. The information processing apparatus according to claim 1, wherein
the application execution unit is able to set a first type indicating that sounds of a plurality of different sound sources are included to the sound source data based on selection of a user, and
the display control unit displays the sound source data in a list on the display unit together with an icon indicating that the first type is set, when the first type is set to the sound source data.

6. The information processing apparatus according to claim 5, wherein
sound quality improvement processing for performing the sound quality improvement includes audio separation processing of separating an arbitrary sound source portion from the sound source data when a plurality of different sound sources are included in the sound source data, and
the display control unit causes the display unit to display the menu for sound quality improvement so as to be able to select the audio separation processing only when the first type is set to the sound source data.

7. The information processing apparatus according to claim 6, wherein
the sound quality improvement processing includes de-noise processing of removing a portion other than the arbitrary sound source portion as noise using the audio separation processing, and
the display control unit causes the display unit to display the menu for sound quality improvement so as to be able to simultaneously select the audio separation processing and the de-noise processing when the first type is set to the sound source data.

8. The information processing apparatus according to claim 7, wherein
the display control unit causes the display unit to display the menu for sound quality improvement so as to be able to independently select the de-noise processing when another type other than the first type is set to the sound source data.

9. The information processing apparatus according to claim 7, wherein
the display control unit displays data subjected to the sound quality improvement processing in a list on the display unit together with an icon indicating that the sound quality improvement processing has been performed, when the data subjected to the sound quality improvement processing is acquired.

10. An information processing method, comprising:
executing an application having a recording function and an editing function of a sound source data; and
causing a display unit to variably display a menu for sound quality improvement in conjunction with a type of the sound source data, the sound source data being selected by a user as a target for the sound quality improvement via the application.

11. A program for causing a computer to perform:
executing an application having a recording function and an editing function of a sound source data; and
causing a display unit to variably display a menu for sound quality improvement in conjunction with a type of the sound source data, the sound source data being selected by a user as a target for the sound quality improvement via the application.
